# EUROPEAN PATENT SPECIFICATION

(11) **EP 4 411 142 B1**
(45) Date of publication and mention of the grant of the patent: **15.07.2026**
(21) Application number: 23837124.9
(22) Date of filing: 19.10.2023
(51) Int. Cl.: F16C 35/02, F16C 27/02, F04D 29/047, F04D 13/06, F16C 17/02, F16C 17/26, F16C 33/04

(54) **HIGH-TEMPERATURE MAGNETIC DRIVE PUMP AND DESIGN AND DEVELOPMENT METHOD THEREFOR**
MAGNETISCHE HOCHTEMPERATUR-ANTRIEBSPUMPE UND ENTWURFS- UND ENTWICKLUNGSVERFAHREN DAFÜR
POMPE À ENTRAÎNEMENT MAGNÉTIQUE À HAUTE TEMPÉRATURE ET SON PROCÉDÉ DE CONCEPTION ET DE DÉVELOPPEMENT

(30) Priority: 21.12.2022 CN 202211649199
(43) Date of publication of application: 07.08.2024
(73) Proprietor: Hangzhou Dalu Industry Co., Ltd., Hangzhou, Zhejiang 310000 (CN)
(72) Inventor: YANG, Jianqing, Hangzhou, Zhejiang 310000 (CN); LI, Xiaoqin, Hangzhou, Zhejiang 310000 (CN); LAI, Xiaofeng, Hangzhou, Zhejiang 310000 (CN); CAO, Huanfang, Hangzhou, Zhejiang 310000 (CN); WANG, Weifang, Hangzhou, Zhejiang 310000 (CN)
(74) Representative: Izquierdo Blanco, Maria Alicia
(86) International application number: PCT/CN2023/125296
(87) International publication number: WO 2024/131241

(56) References cited:
- CN-A- 102 410 242
- CN-A- 102 410 242
- CN-A- 108 984 968
- CN-A- 113 700 737
- CN-A- 116 044 773
- CN-U- 204 164 177
- CN-Y- 201 401 359
- JP-A- 2015 052 273
- US-A1- 2010 201 127

## Description

### BACKGROUND OF THE PRESENT INVENTION

### Field of Invention

The present disclosure relates to the technical field of magnetic pumps, and specifically to a high-temperature magnetic drive pump and a design and development method therefor.

### Description of Related Arts

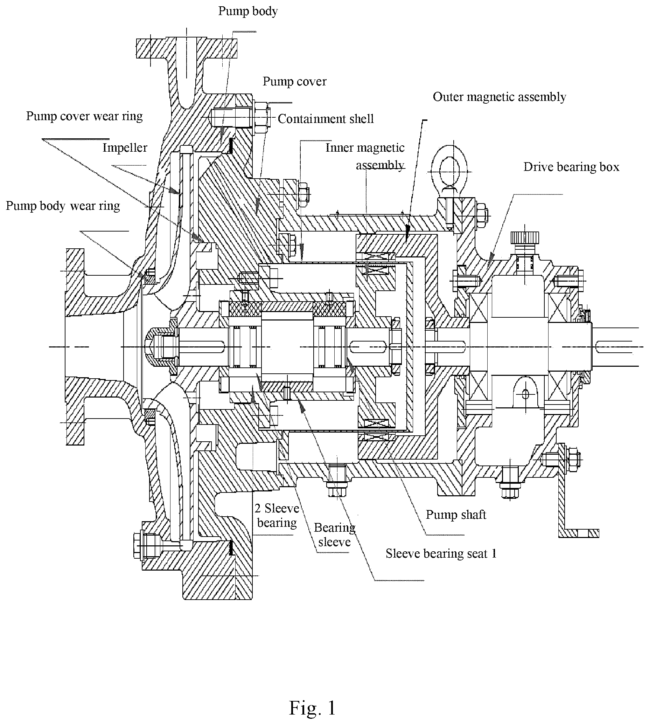

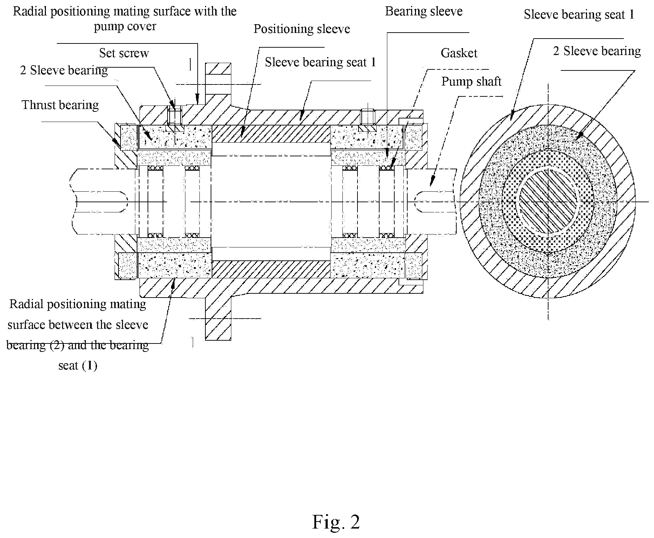

As shown in Fig. 1 and Fig. 2, a currently known magnetic drive pump consists of a pump body, an impeller, a pump cover, an outer magnetic assembly, a drive component, an inner magnetic assembly, double thrust bearings, a containment shell, a pump shaft, two shaft sleeves, a set of sleeve bearing assembly, a motor, etc., where a sleeve bearing is mounted in an inner hole of the pump cover through a sleeve bearing seat. The inner and outer magnetic assemblies are isolated by the non-magnetic containment shell, and the containment shell is fastened to the pump cover by a wear gasket. The inner magnetic assembly connected to the impeller is driven by the outer magnetic assembly connected to the motor through the action of a magnetic field, so that the pump delivers a medium in a fully-sealed and leak-free manner. Due to the leak-free characteristic, the magnetic pump is widely used in the delivery of flammable, explosive, highly toxic, valuable, and corrosive media in the fields of petrochemicals and the like.

Since an inner rotor component of the magnetic pump is immersed in the medium, as a support for the inner rotor component, the bearing is generally a sleeve bearing, which is lubricated by the medium being delivered. For occasions that require long-term reliable operation, in order to improve the operational reliability of the magnetic pump, the sleeve bearing needs to be made of a wear-resistant ceramic material, such as silicon carbide ceramic which is currently widely used in magnetic pumps. As is well known, the silicon carbide ceramic has a very small thermal coefficient of expansion, which is about 4×10⁻⁶/°C, while metal materials used for bearing seats have higher coefficients of expansion, where commonly used martensitic stainless steel has a thermal coefficient of expansion of 11×10⁻⁶/°C, and austenitic stainless steel has a thermal coefficient of expansion of 16×10⁻⁶/°C, about 2.5-4 times that of the silicon carbide bearing. This will cause a huge differential expansion between the silicon carbide sleeve bearing and a metal bearing seat base. Taking a conventional thermal oil pump operating at a temperature of 320°C as an example, when an outer diameter of the sleeve bearing is 100 mm, the differential expansion between the sleeve bearing made of silicon carbide and the metal bearing seat will be at least 0.21 mm at a temperature rise of 300°C.

This leads to the following results: (1) If a clearance or transition fit is used for the convenience of assembly and maintenance, the clearance between the sleeve bearing and the bearing seat will be larger due to the differential expansion during high-temperature operation, for example, the sleeve bearing of the above size will have a fit clearance of about 0.2 mm and will be significantly loosened, so that the vibration of the pump increases, and the brittle silicon carbide ceramic sleeve bearing is prone to damage; meanwhile, the increase in the clearance causes the sleeve bearing to deviate from an axis of the bearing seat base, so that the rotor deviates from the axis of the base under the action of gravity or internal hydraulic radial force, a clearance portion of a wear ring with a small clearance is scraped and worn to shorten the service life, and the collision increases the vibration of the rotor, which in turn affects the reliability of the brittle sleeve bearing and easily leads to the fracture and damage of the silicon carbide ceramic sleeve bearing. Therefore, the clearance fit is almost not used in high-temperature magnetic pumps, but the following interference fit is used.

(2) The interference fit can prevent looseness at high temperatures. Due to the large differential expansion, a large amount of interference is required to avoid looseness of the sleeve bearing and the bearing seat. Taking the matching size of the foregoing sleeve bearing having a diameter of 100 mm as an example, an interference of at least 0.21 mm is required. The silicon carbide having an elastic modulus of about 450 GPa and bending and shear strength lower than that of metals is a brittle material. Therefore, after assembly, under normal temperature and cold conditions, the stress at the sleeve bearing is very large, and the stress at a diversion trench has exceeded the compressive strength of the silicon carbide material, so fracture and damage are prone to occur. Even if not damaged at the beginning, the magnetic pump still cracks and is damaged due to vibration in a cold start process. The large interference makes on-site assembly and disassembly inconvenient, and a high-temperature heater is required, which is not conducive to ensuring the continuous, safe, and reliable operation of a petrochemical process apparatus.

(3) However, the interference assembly results in a very large stress, which can reach about 1,000 Mpa, even exceeds the tensile strength of commonly used metal materials, and far exceeds the yield stress of commonly used metal materials for magnetic pumps, leading to yielding deformation or even rupture of the bearing seat. The stress acting on the bearing seat also leads to large deformation of the bearing seat, with a significant increase in the size of an outer circumferential surface by 0.12 mm. The sleeve bearing needs to be repaired to be similar in size to the inner hole of the pump cover before being mounted into a positioning hole of the pump cover. However, under high temperature conditions, the interference between the silicon carbide bearing with a small thermal coefficient of expansion and a small amount of expansion and the bearing seat base decreases, so that the deformation caused by the interference stress on the bearing seat base decreases, the clearance between the silicon carbide bearing and the inner hole of the freely expanding pump cover increases, the sleeve bearing deviates from the pump cover, the rotor deviates from the base, the impeller wear ring on the rotor is scraped, the service life is shortened, the vibration increases, and the sleeve bearing is fractured. Once the sleeve bearing is fractured, the rotor of the magnetic pump will collide with the containment shell, resulting in damage to the containment shell and serious safety accidents such as leakage of high-temperature flammable media.

The patent CN102410242A relates to a sliding bearing for magnetic pumps and a clearance compensation structure thereof. The clearance compensation structure of the sliding bearing for magnetic pumps comprises the bearing bush sleeved on the impeller shaft and the bearing pedestal, the bearing bush is mounted in the bearing pedestal, and the diameter of the outer circumference of the bearing bush is smaller than the diameter of the bearing bush-mounting hole of the bearing pedestal; a clearance compensation ring is arranged between the bearing bush and the bearing pedestal. The clearance compensation ring comprises a shrinkable elastic body that abuts the outer circumference of the bearing bush and the inner wall of the mounting hole of the bearing bush. However, this solution increases the maintenance requirements of the magnetic pump.

Also known is patent US2010201127A1 which relates to a turboalternator system comprising a turboalternator with a rotatable member operatively coupled to a bearing assembly, a radial support element and a contact structure coupled to the radial support element. The turbo-alternator system is configured to be thermally adjustable such that, in a first thermal condition, the contact structure contacts the rotating member to provide support, and in a second thermal condition, the contact structure is moved away from the shaft. The contact structure includes a ring having a groove formed in an outer diameter surface thereof, and the radial support element is coupled to the groove of the contact structure. However, the contact structure described above, being a restraint system, does not allow free movement at all operating temperatures.

Therefore, the currently known high-temperature magnetic pump employs a small interference fit between the sleeve bearing and the bearing seat and anti-rotation arrangement that a set screw supports the sleeve bearing, and the clearance of the impeller wear ring is significantly increased to prevent collision during operation. Although the wear ring is not collided, the increase in the clearance of the wear ring leads to a significant increase in reflux loss at the wear ring and a significant decrease in the efficiency of the magnetic pump, with higher energy consumption. Meanwhile, the small interference fit design increases the clearance between the sleeve bearing and the bearing seat at high temperatures to cause their looseness, the sleeve bearing is prone to local cracks and damage over time under the action of high temperature and vibration force, and the bearing seat is prone to leaning to one side due to loose fit with the pump cover, so that the rotor is eccentric to increase the vibration.

In summary, the structural design of the sleeve bearing of the currently known magnetic pump has the problems of looseness at high temperatures and inability to maintain coaxiality at all times. The currently known high-temperature magnetic pump has hidden defects that affect its reliable operation, and can rely on only multiple times of shutdown, disassembly, and wear inspection to reduce the probability of accidents. The biggest hidden risk of the currently known magnetic pump used under high-temperature conditions is the reliability of the sleeve bearing. Although the currently known magnetic pump can barely be used under high-temperature conditions, its high vibration, many hidden dangers of use, poor reliability, and short maintenance intervals are not conducive to the requirements of the petrochemical industry for long-term safe and reliable operation of devices. In addition, the currently known magnetic pump has a high fault rate and high safety risk, and its low operating efficiency results in high energy consumption, which is not conducive to a goal of energy conservation and carbon emission reduction.

Therefore, a novel design is urgently needed to ensure that the sleeve bearing is not loosened and the coaxiality can always be maintained, and to completely solve the problem that both anti-loosening and coaxiality cannot be maintained at the same time in the currently known high-temperature magnetic pump, so that the magnetic pump can operate reliably and efficiently for a long period under high temperature and variable temperature conditions, and is easy and efficient to maintain, disassemble, and assemble.

### SUMMARY OF THE PRESENT INVENTION

The present disclosure aims to provide a high-temperature magnetic drive pump and a design and development method therefor in response to the above problems in the prior art.

The core of the present disclosure is to reduce the structural stiffness of a surface of a supporting portion of a bearing seat, reduce the stress generated during large interference assembly, avoid damage to the sleeve bearing, reduce assembly and disassembly force, and facilitate maintenance without affecting the fit size between the bearing seat and an outer mounting base, so that the sleeve bearing always maintains coaxiality with the mounting base. The present disclosure optimizes only the design and development of the structure of the sleeve bearing of the high-temperature magnetic drive pump, and all other structures are based on the prior art.

In order to achieve the above application objective, the present disclosure employs the following technical solutions: A design and development method for a high-temperature magnetic drive pump includes the following steps:
S00. uniformly arranging a plurality of spiral gaps of the same shape and length in a circumferential direction on a surface of an inner hole of a bearing seat of the magnetic drive pump, and arranging openings of the spiral gaps on the surface of the inner hole, with tail ends located in a base of the bearing seat;
S10. calculating differential expansion at a mating surface between the bearing seat and a sleeve bearing from room temperature to a design temperature required by the magnetic drive pump;
S20. determining a size of the inner hole of the bearing seat according to the differential expansion, an outer diameter of the sleeve bearing, and interference requirements at the design temperature such that the magnetic drive pump can operate normally at room temperature in a cold state, and when operating at the design temperature the bearing seat and the sleeve bearing are not loosened at high temperature; and
S30. checking a strength of a supporting sheet of the bearing seat and continuously adjusting a structural size and/or shape and/or quantity of the supporting sheet until a stress on the supporting sheet is less than or equal to an allowable stress of a bearing seat material, so as to complete the design of the high-temperature magnetic drive pump, where
the supporting sheet is located at a portion of fit between the bearing seat and the sleeve bearing.

Further, in step S00, the spiral gap has an involute or circular arc or approximately circular arc shape.

Further, in step S00, a ratio of a radial distance between the tail end of the spiral gap and the surface of the inner hole of the bearing seat to a length of the spiral gap is 0.1 to 0.25.

Further, in step S00, at a set distance from a starting end of a spiral line of the spiral gap, the supporting sheet has a wall thickness of at least 0.5 mm, where the starting end of the spiral line intersects with the inner surface of the inner hole of the bearing seat.

Further, in step S00, the number of spiral gaps is not less than six.

Further, in step S00, starting and ending lengths of adjacent spiral gaps are located at the same circumferential azimuth angle in the circumferential direction, so as to form a sheet structure on the inner surface of the bearing seat, where one end of the sheet is suspended, and the other end is fixed to the base of the bearing seat to form a cantilever beam-type sheet.

Further, in step S10, the differential expansion is calculated according to a linear coefficient of expansion of the bearing seat, a linear coefficient of expansion of a sleeve bearing material, a size of an outer diameter mating portion of the sleeve bearing, and the design temperature required by the magnetic drive pump.

Further, in step S20, the size of the inner hole of the bearing seat is determined according to the differential expansion, the outer diameter of the sleeve bearing, and an amount of interference, where the amount of interference is an increase in the differential expansion by pre-tightening force, and the amount of interference replaces the differential expansion to achieve an anti-loosening effect at high temperatures.

Further, the amount of interference is 115% to 130% of the differential expansion.

A high-temperature magnetic drive pump is designed and developed through the above design and development method for a high-temperature magnetic drive pump.

Compared with the prior art, the present disclosure has the following beneficial effects:
1. When the bearing seat involved in the method of the present disclosure produces the same amount of deformation caused by the interference structure, because the force required by the bending deformation of the cantilever beam-type sheet is much smaller than that of a rigid thick-wall cylinder, the stress is significantly reduced in a case of large interference assembly of the sleeve bearing and the bearing seat, and the high-temperature magnetic drive pump is easy to assemble and disassemble and can operate normally at room temperature in a cold state; when operating at the design temperature, the temperature rise decreases the interference between the bearing seat and the sleeve bearing, but the two are still in close interference fit, thereby ensuring that the two are not loosened at high temperatures, maintaining the coaxiality between the two, and completely solving the problems and defects of the original high-temperature magnetic pump;
2. The integrated sheets on the inner surface of the bearing seat involved in the method of the present disclosure can be formed by an electrical discharge wire cutting method and are evenly distributed along the circumference, and a plurality of end-closed gaps are cut out to form a plurality of thin supporting sheets of the same size. The gaps formed by wire cutting become an activity space required for the radial bending deformation of the supporting sheets, which can reduce the structural stiffness of the surface of the supporting portion of the bearing seat, reduce the stress generated during large interference assembly, avoid damage to the sleeve bearing, reduce assembly and disassembly force, and facilitate maintenance without affecting the fit size between the bearing seat and the outer mounting base, so that the sleeve bearing always maintains coaxiality with the mounting base;
3. The supporting sheets of the present disclosure have withstood the stress caused by large interference through the bending deformation, so the portion of the bearing seat in fit with the pump cover is almost not affected by the interference fit of the inner hole, and can freely follow thermal expansion and contraction of the pump cover, always maintain coaxiality with the pump cover, and achieve a temperature adaptive effect;
4. The interference and the pre-tightening force generated by some interference are added as anti-loosening requirements at high temperatures when the size of the inner hole of the bearing seat is determined. Because a coefficient of friction of a sleeve bearing pair is very small, an anti-rotating effect can be achieved only by slightly increasing the pre-tightening force.

### BRIEF DESCRIPTION OF THE DRAWINGS

Fig. 1 is a schematic structural diagram of a magnetic pump in the prior art;
Fig. 2 is an enlarged structural diagram of a sleeve bearing portion in Fig. 1;
Fig. 3 is a design flowchart of the present disclosure;
Fig. 4 is a structural diagram of a sleeve bearing component of the present disclosure;
Fig. 5 is a side view of Fig. 4;
Fig. 6 is a partially enlarged view of a mating portion of a sleeve bearing component designed in the present disclosure; and
Fig. 7 is a partially enlarged view of Fig. 6.

In the figures, 1. Bearing seat; 2. Sliding bearing; 3. Spiral gap; 4. Sheet; 5. Spiral line; 31. Starting end (of spiral gap 3); 32. Tail end (of spiral gap 3).

### DETAILED DESCRIPTION OF THE PREFERRED EMBODIMENT

Technical solutions in embodiments of the present disclosure will be clearly and completely described below with reference to the accompanying drawings in the embodiments of the present disclosure. Apparently, the described embodiments are merely some, but not all of the embodiments of the present disclosure. All other embodiments obtained by those of ordinary skill in the art based on the embodiments in the present disclosure fall within the scope of protection of the present disclosure.

Those skilled in the art should understand that, in the disclosure of the present disclosure, the orientations or positional relationships indicated by the terms "longitudinal", "lateral", "upper", "lower", "front", "rear", "left", "right", "vertical", "horizontal", "top", "bottom", "inner", "outer", and the like are based on the orientations or positional relationships shown in the accompanying drawings, and are intended to facilitate the description of the present disclosure and simplify the description only, rather than indicating or implying that an apparatus or element referred to must have a particular orientation or be constructed and operated in a particular orientation, and therefore, these terms cannot be interpreted as limiting the present disclosure.

### Embodiment 1

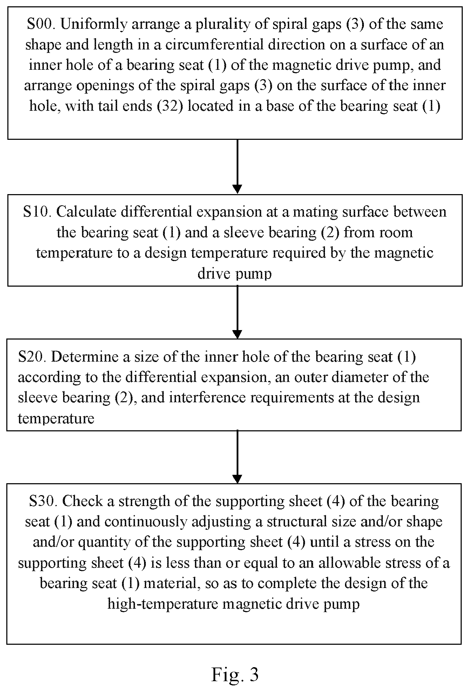

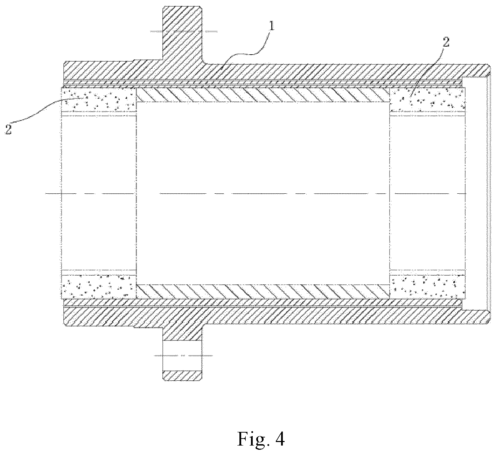

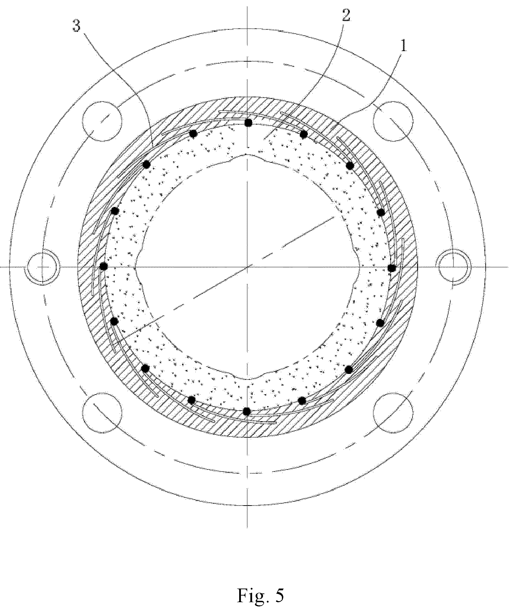

As shown in Fig. 3, a design and development method for a high-temperature magnetic drive pump includes the following steps:
S00. A plurality of spiral gaps 3 of the same shape and length are uniformly arranged in a circumferential direction on a surface of an inner hole of a bearing seat 1 of the magnetic drive pump, and openings of the spiral gaps 3 are arranged on the surface of the inner hole, with tail ends located in a base of the bearing seat 1;
In this embodiment, as shown in Fig. 4 and Fig. 5, the spiral gap 3 is involute or replaced by an approximately circular arc, a ratio X of a radial distance h₁ between the tail end 32 of the spiral gap 3 and the surface of the inner hole of the bearing seat 1 to a length of the spiral gap 3 is 0.1 to 0.25, and at a set distance from a starting end of a spiral line 5 of the spiral gap 3, a sheet 4, at its starting end, has a solid wall thickness h₀ of at least 0.5 mm.

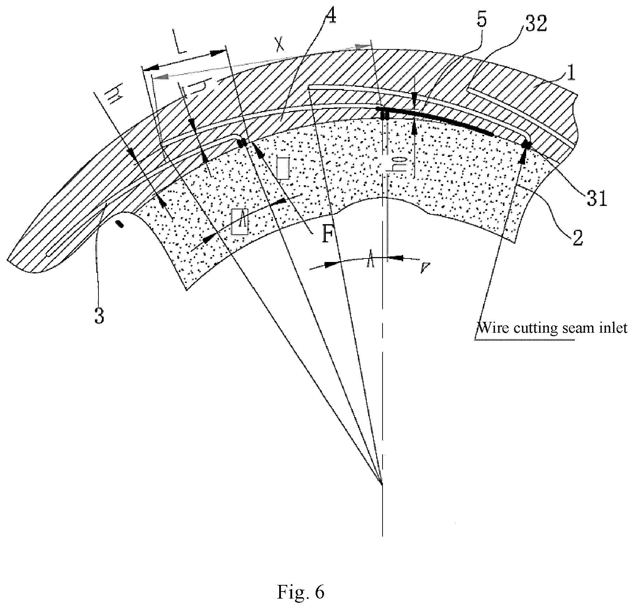

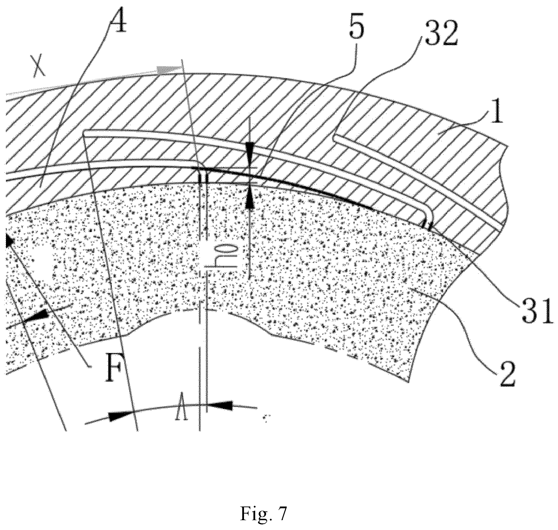

Preferably, the number of gaps 3 on one circle is not less than 6 and is between 6 and 16, an angle of each gap 3 in the circumferential direction is greater than (360°/the number of gaps 3), as shown in Fig. 6 and Fig. 7. The length of the spiral gap 3 is limited to ensure that the angle of each gap 3 in the circumferential direction is greater than (360°/the number of gaps 3), that is, starting and ending lengths of adjacent spiral gaps 3 are located at the same circumferential azimuth angle A in the circumferential direction, so that starting from any position on the surface of the inner hole of the bearing seat 1, at least one gap 3 is passed radially outward. Starting and ending azimuths pass through two gaps 3, so as to form a sheet 4 structure on the inner surface of the bearing seat 1, where one end of the sheet 4 is suspended and the other end is fixed to the base of the bearing seat 1 to form a cantilever beam-type sheet 4. The solid thickness inside the gap 3 and between the gaps 3 is the wall thickness h of the sheet 4, and the length L between the starting end 31 of the gap 3 and the tail end 32 of the adjacent gap 3 is the length between a force point of the cantilever beam and a fixed end.
S10. Differential expansion at a mating surface between the bearing seat 1 and a sleeve bearing 2 from room temperature to a design temperature required by the magnetic drive pump is calculated;
   In this embodiment, according to the design temperature T₂ required by the high-temperature magnetic pump, it can be seen that the temperature increases by Δt compared to normal temperature. Given that a size of an outer diameter mating portion of the sleeve bearing 2 is d, a linear coefficient of expansion of the metal bearing seat 1 is α₁ and a linear coefficient of expansion of a silicon carbide sleeve bearing 2 material is α₂, the differential expansion Δd=d*Δt*(α₁-α₂) at the mating surface between the metal bearing seat 1 and the silicon carbide sleeve bearing 2 is calculated.
S20. A size of the inner hole of the bearing seat 1 is determined according to the differential expansion, an outer diameter of the sleeve bearing 2, and interference requirements at the design temperature;
   In this embodiment, based on the difference between the outer diameter of the sleeve bearing 2 and the differential expansion (d-Δd), an amount of interference increased by 15% to 30% from the differential expansion Δd (because a coefficient of friction of a sleeve bearing 2 pair is very small, an anti-rotating effect can be achieved only by slightly increasing pre-tightening force) is preferably used as a design amount of interference Δdₛ to serve as an initial inner hole size (d-Δdₛ) of the bearing seat 1. The pre-tightening force generated by some interference is added as anti-loosening requirements at high temperatures.
S30. A strength of the supporting sheet 4 of the bearing seat 1 is checked and a structural size and/or shape and/or quantity of the supporting sheet 4 are continuously adjusted until a stress on the supporting sheet 4 is less than or equal to an allowable stress of a bearing seat material, so as to complete the design of the high-temperature magnetic drive pump, where the supporting sheet 4 is located at a portion of fit between the bearing seat 1 and the sleeve bearing 2.

In this embodiment, the stiffness of the sleeve bearing 2 is very high, the supporting sheet 4 on the bearing seat 1 is lifted by the sleeve bearing 2 to bend and deform at room temperature in a cold state due to interference, and the large interference indicates a large deflection caused by bending, so a large stress is produced. Unilateral (radius) interference may be regarded as the deflection y generated by the supporting sheet 4 on the bearing seat 1; according to a deflection calculation formula y=FL³/3EI for the cantilever beam and the structural size of the sheet 4 (where F is a force acting on a supporting portion, L is a distance from the supporting portion to a fixed end (see Fig. 6 and Fig. 7), E is an elastic modulus of the material, and I is a moment of inertia of a cross-section of the sheet 4 relative to a bending direction), the force F acting on the designed sheet 4 can be calculated;

Then, a bending moment M=FL on the sheet 4 beam can be calculated, where F is shown in Fig. 6; according to a stress calculation formula σ= M/W for the cantilever beam (W is a bending section modulus of the sheet 4), the stress at the sheet 4 of the bearing seat 1 is calculated; the calculated stress is compared with the allowable stress of the bearing seat 1 material, and if the calculated stress is not greater than the allowable stress, the design is completed; otherwise, the structural size and shape of the sheet 4, such as L, h, or the number of sheets 4, are changed, and re-calculation and re-check are performed until the stress meets the requirements.

In this case, when the same amount of deformation caused by the interference structure is produced, because the force required by the bending deformation of the cantilever beam-type sheet 4 (also known as a supporting sheet 4 or a sheet 4) is much smaller than that of a rigid thick-wall cylinder, the stress is significantly reduced in a case of large interference assembly of the sleeve bearing 2 and the bearing seat 1, and the high-temperature magnetic drive pump is easy to assemble and disassemble and can operate normally at room temperature in a cold state; when operating at the design temperature, the temperature rise decreases the interference between the bearing seat 1 and the sleeve bearing 2, but the two are still in close interference fit, thereby ensuring that the two are not loosened at high temperatures, maintaining the coaxiality between the two, and completely solving the problems and defects of the original high-temperature magnetic pump.

### Embodiment 2

A high-temperature magnetic drive pump is produced by the design and development method for a high-temperature magnetic drive pump based on Embodiment 1. The remaining components are the same as those in the prior art.

For example, integrated sheets 4 on the inner surface of the sleeve bearing seat 1 of the high-temperature magnetic drive pump are formed by an electrical discharge wire cutting method and are evenly distributed along the circumference, and a plurality of end-closed gaps 3 are cut out to form a plurality of thin supporting sheets of the same size. The gaps 3 formed by wire cutting become an activity space required for the radial bending deformation of the supporting sheets 4.

Therefore, the high-temperature magnetic pump of the present disclosure completely solves the shortcomings of a conventional leak-free magnetic drive pump operating at high temperatures, such as low pump efficiency, poor operational reliability of the sleeve bearing 2, and inconvenient maintenance, meets the requirements of leak-free medium delivery under high temperature and variable temperature conditions, and has the advantages of low operating vibration, high efficiency, high reliability, and convenient assembly and maintenance.

The unspecified parts of the present disclosure are the prior art, and therefore, are not detailed in the present disclosure.

It can be understood that the term "a" should be understood as "at least one" or "one or more", that is, in one embodiment, the number of an element may be one, and in another embodiment, the number of the element may be more than one, so the term "one" cannot be understood as a restriction on the number.

Although the terms such as the bearing seat 1, the sleeve bearing 2, the gap 3, the sheet 4, the spiral line 5, the starting end 31 of the gap 3, and the tail end 32 of the gap 3 are extensively used herein, possibilities of using other terms are not excluded. These terms are used only for describing and explaining the essence of the present disclosure more conveniently. Interpreting the terms as any additional restrictions is contrary to the spirit of the present disclosure.

The present disclosure is not limited to the foregoing best embodiments. Any person can derive other products in various forms under the enlightenment of the present disclosure. However, regardless of any change in shape or structure, all other technical solutions that are the same as or similar to the technical solutions of the present disclosure fall within the protection scope of the present disclosure.

## Claims

1. A design and development method for a high-temperature magnetic drive pump, comprising the following steps:
S00. uniformly arranging a plurality of spiral gaps (3) of the same shape and length in a circumferential direction on a surface of an inner hole of a bearing seat (1) of the magnetic drive pump, and arranging openings of the spiral gaps (3) on the surface of the inner hole, with tail ends (32) located in a base of the bearing seat (1), wherein
starting and ending lengths of adjacent spiral gaps (3) are located at the same circumferential azimuth angle in the circumferential direction, so as to form a sheet (4) structure on the inner surface of the bearing seat (1), wherein one end of the sheet (4) is suspended and the other end is fixed to the base of the bearing seat (1) to form a cantilever beam-type sheet (4) as a supporting sheet (4), and
an angle of each spiral gap (3) in the circumferential direction is greater than 360°/the number of spiral gaps (3);
**characterized by**
S10. calculating differential expansion at a mating surface between the bearing seat (1) and a sleeve bearing (2) from room temperature to a design temperature required by the magnetic drive pump;
S20. determining a size of the inner hole of the bearing seat (1) according to the differential expansion, an outer diameter of the sleeve bearing (2), and interference requirements at the design temperature such that the magnetic drive pump can operate normally at room temperature in a cold state, and when operating at the design temperature the bearing seat and the sleeve bearing are not loosened at high temperature; and
S30. checking a strength of the supporting sheet (4) of the bearing seat (1) and continuously adjusting a structural size and/or shape and/or quantity of the supporting sheet (4) until a stress on the supporting sheet (4) is less than or equal to an allowable stress of a bearing seat (1) material, so as to complete the design of the high-temperature magnetic drive pump, wherein
the supporting sheet (4) is located at a portion of fit between the bearing seat (1) and the sleeve bearing (2).

2. The design and development method for a high-temperature magnetic drive pump according to claim 1, wherein in step S00, the spiral gap (3) has an involute or circular arc or approximately circular arc shape.

3. The design and development method for a high-temperature magnetic drive pump according to claim 1, wherein in step S00, a ratio of a radial distance between the tail end (32) of the spiral gap (3) and the surface of the inner hole of the bearing seat (1) to a length of the spiral gap (3) is 0.1 to 0.25.

4. The design and development method for a high-temperature magnetic drive pump according to claim 3, wherein in step S00, at a set distance from a starting end of a spiral line (5) of the spiral gap (3), the supporting sheet (4) has a wall thickness of at least 0.5 mm, wherein the starting end of the spiral line (5) intersects with the inner surface of the inner hole of the bearing seat (1).

5. The design and development method for a high-temperature magnetic drive pump according to claim 1, wherein in step S00, the number of spiral gaps (3) is not less than six.

6. The design and development method for a high-temperature magnetic drive pump according to any one of claims 1-5, wherein in step S10, the differential expansion is calculated according to a linear coefficient of expansion of the bearing seat (1), a linear coefficient of expansion of a sleeve bearing (2) material, a size of an outer diameter mating portion of the sleeve bearing (2), and the design temperature required by the magnetic drive pump.

7. The design and development method for a high-temperature magnetic drive pump according to any one of claims 1-5, wherein in step S20, the size of the inner hole of the bearing seat (1) is determined according to the differential expansion, the outer diameter of the sleeve bearing (2), and an amount of interference, wherein the amount of interference is an increase in the differential expansion by pre-tightening force, and the amount of interference replaces the differential expansion to achieve an anti-loosening effect at high temperatures.

8. The design and development method for a high-temperature magnetic drive pump according to claim 7, wherein the amount of interference is 115% to 130% of the differential expansion.

9. A high-temperature magnetic drive pump, designed and developed by the design and development method for a high-temperature magnetic drive pump according to any one of claims 1-8.

## Patentansprüche

1. Ein Konstruktions- und Entwicklungsverfahren für eine Hochtemperatur-Magnetkupplungspumpe, umfassend die folgenden Schritte:
S00. Gleichmäßiges Anordnen mehrerer spiralförmiger Spalten (3) gleicher Form und Länge in Umfangsrichtung auf der Oberfläche einer Innenbohrung eines Lagersitzes (1) der Magnetkupplungspumpe und Anordnen von Öffnungen der spiralförmigen Spalten (3) auf der Oberfläche der Innenbohrung, wobei deren Enden (32) im Boden des Lagersitzes (1) angeordnet sind, wobei
Die Anfangs- und Endlängen benachbarter spiralförmiger Spalten (3) sind in Umfangsrichtung im gleichen Umfangsazimutwinkel angeordnet, sodass eine Blechstruktur (4) auf der Innenfläche des Lagersitzes (1) gebildet wird, wobei ein Ende des Blechs (4) aufgehängt und das andere Ende an der Basis des Lagersitzes (1) befestigt ist, um ein Kragarmblech (4) als Stützblech (4) zu bilden.
Der Winkel jedes Spiralspaltes (3) in Umfangsrichtung ist größer als 360°/die Anzahl der Spiralspalte (3);
**gekennzeichnet durch**
S10. Berechnung der differentiellen Ausdehnung an einer Passfläche zwischen dem Lagersitz (1) und einem Gleitlager (2) von Raumtemperatur bis zu einer von der Magnetkupplungspumpe geforderten Auslegungstemperatur;
S20. Bestimmung der Größe der Innenbohrung des Lagersitzes (1) entsprechend der Differenzausdehnung, des Außendurchmessers des Gleitlagers (2) und der Presspassungsanforderungen bei der Auslegungstemperatur, so dass die Magnetkupplungspumpe im kalten Zustand bei Raumtemperatur normal funktionieren kann und sich der Lagersitz und das Gleitlager bei Betrieb bei der Auslegungstemperatur auch bei hohen Temperaturen nicht lösen; und
S30. Überprüfung der Festigkeit des Trägerblechs (4) des Lagersitzes (1) und kontinuierliche Anpassung der strukturellen Größe und/oder Form und/oder Anzahl des Trägerblechs (4), bis die Spannung im Trägerblech (4) kleiner oder gleich der zulässigen Spannung des Materials des Lagersitzes (1) ist, um die Konstruktion der Hochtemperatur-Magnetkupplungspumpe abzuschließen, wobei
Das Stützblech (4) befindet sich an einer Passung zwischen dem Lagersitz (1) und dem Gleitlager (2).

2. Das Konstruktions- und Entwicklungsverfahren für eine Hochtemperatur-Magnetkupplungspumpe nach Anspruch 1, wobei in Schritt S00 der spiralförmige Spalt (3) eine Evolventen-, Kreisbogen- oder annähernd Kreisbogenform aufweist.

3. Das Konstruktions- und Entwicklungsverfahren für eine Hochtemperatur-Magnetkupplungspumpe nach Anspruch 1, wobei in Schritt S00 das Verhältnis des radialen Abstands zwischen dem hinteren Ende (32) des Spiralspalts (3) und der Oberfläche der Innenbohrung des Lagersitzes (1) zur Länge des Spiralspalts (3) 0,1 bis 0,25 beträgt.

4. Das Konstruktions- und Entwicklungsverfahren für eine Hochtemperatur-Magnetkupplungspumpe nach Anspruch 3, wobei in Schritt S00 in einem festgelegten Abstand vom Anfangsende einer Spirallinie (5) des Spiralspalts (3) die Stützplatte (4) eine Wandstärke von mindestens 0,5 mm aufweist und das Anfangsende der Spirallinie (5) die Innenfläche der Innenbohrung des Lagersitzes (1) schneidet.

5. Das Konstruktions- und Entwicklungsverfahren für eine Hochtemperatur-Magnetkupplungspumpe nach Anspruch 1, wobei in Schritt S00 die Anzahl der Spiralspalte (3) nicht weniger als sechs beträgt.

6. Das Konstruktions- und Entwicklungsverfahren für eine Hochtemperatur-Magnetkupplungspumpe nach einem der Ansprüche 1 bis 5, wobei in Schritt S10 die differentielle Ausdehnung nach einem linearen Ausdehnungskoeffizienten des Lagersitzes (1), einem linearen Ausdehnungskoeffizienten des Gleitlagermaterials (2), der Größe des äußeren Durchmessers des Passabschnitts des Gleitlagers (2) und der von der Magnetkupplungspumpe geforderten Auslegungstemperatur berechnet wird.

7. Das Konstruktions- und Entwicklungsverfahren für eine Hochtemperatur-Magnetkupplungspumpe nach einem der Ansprüche 1 bis 5, wobei in Schritt S20 die Größe der Innenbohrung des Lagersitzes (1) gemäß der Differenzausdehnung, dem Außendurchmesser des Gleitlagers (2) und einem Übermaß bestimmt wird, wobei das Übermaß eine Erhöhung der Differenzausdehnung durch Vorspannkraft darstellt und das Übermaß die Differenzausdehnung ersetzt, um bei hohen Temperaturen eine Löslichkeitsverhinderung zu erzielen.

8. Das Konstruktions- und Entwicklungsverfahren für eine Hochtemperatur-Magnetkupplungspumpe nach Anspruch 7, wobei der Interferenzbetrag 115 % bis 130 % der Differenzausdehnung beträgt.

9. Eine Hochtemperatur-Magnetkupplungspumpe, die nach dem Konstruktions- und Entwicklungsverfahren für eine Hochtemperatur-Magnetkupplungspumpe gemäß einem der Ansprüche 1-8 konstruiert und entwickelt wurde.

## Revendications

1. Procédé de conception et de développement d'une pompe à entraînement magnétique haute température, comprenant les étapes suivantes :
S00. disposer uniformément une pluralité d'encoches spirales (3) de même forme et de même longueur dans une direction circonférentielle sur la surface d'un alésage intérieur d'un logement de palier (1) de la pompe à entraînement magnétique, et disposer les ouvertures des encoches spirales (3) sur la surface de l'alésage intérieur, leurs extrémités (32) étant situées dans la base du logement de palier (1), dans lequel
Les longueurs de début et de fin des fentes spirales adjacentes (3) sont situées au même angle d'azimut circonférentiel dans la direction circonférentielle, de manière à former une structure de feuille (4) sur la surface intérieure du siège de palier (1), dans laquelle une extrémité de la feuille (4) est suspendue et l'autre extrémité est fixée à la base du siège de palier (1) pour former une feuille de type poutre en porte-à-faux (4) servant de feuille de support (4), et
un angle de chaque espace spiralé (3) dans la direction circonférentielle est supérieur à 360°/le nombre d'espaces spiralés (3) ;
**caractérisé par**
S10. calcul de la dilatation différentielle à une surface d'accouplement entre le siège de palier (1) et un palier lisse (2) de la température ambiante à une température de conception requise par la pompe à entraînement magnétique ;
S20. Déterminer la taille de l'alésage intérieur du logement de palier (1) en fonction de la dilatation différentielle, du diamètre extérieur du palier lisse (2) et des exigences de jeu à la température de conception, de sorte que la pompe à entraînement magnétique puisse fonctionner normalement à température ambiante à froid, et que, lors du fonctionnement à la température de conception, le logement de palier et le palier lisse ne se desserrent pas à haute température ;
S30. Vérification de la résistance de la tôle de support (4) du siège de palier (1) et ajustement continu des dimensions, de la forme et/ou du nombre de tôles de support (4) jusqu'à ce que la contrainte sur la tôle de support (4) soit inférieure ou égale à la contrainte admissible du matériau du siège de palier (1), afin de finaliser la conception de la pompe à entraînement magnétique haute température.
la feuille de support (4) est située dans une partie de l'ajustement entre le siège de palier (1) et le palier lisse (2).

2. Le procédé de conception et de développement d'une pompe à entraînement magnétique haute température selon la revendication 1, dans lequel, à l'étape S00, l'entrefer spiralé (3) a une forme en développante ou en arc de cercle ou approximativement en arc de cercle.

3. Le procédé de conception et de développement d'une pompe à entraînement magnétique haute température selon la revendication 1, dans lequel, à l'étape S00, le rapport entre la distance radiale entre l'extrémité (32) de l'espace spiralé (3) et la surface du trou intérieur du siège de palier (1) et la longueur de l'espace spiralé (3) est de 0,1 à 0,25.

4. Procédé de conception et de développement d'une pompe à entraînement magnétique haute température selon la revendication 3, dans lequel, à l'étape S00, à une distance définie de l'extrémité de départ d'une ligne spirale (5) de l'espace spiralé (3), la feuille de support (4) a une épaisseur de paroi d'au moins 0,5 mm, dans lequel l'extrémité de départ de la ligne spirale (5) intersecte la surface intérieure du trou intérieur du siège de palier (1).

5. Le procédé de conception et de développement d'une pompe à entraînement magnétique haute température selon la revendication 1, dans lequel, à l'étape S00, le nombre d'entrefers en spirale (3) n'est pas inférieur à six.

6. Procédé de conception et de développement d'une pompe à entraînement magnétique haute température selon l'une quelconque des revendications 1 à 5, dans lequel, à l'étape S10, la dilatation différentielle est calculée en fonction d'un coefficient de dilatation linéaire du siège de palier (1), d'un coefficient de dilatation linéaire du matériau d'un palier lisse (2), d'une taille de la partie d'accouplement du diamètre extérieur du palier lisse (2) et de la température de conception requise par la pompe à entraînement magnétique.

7. Procédé de conception et de développement d'une pompe à entraînement magnétique haute température selon l'une quelconque des revendications 1 à 5, dans lequel, à l'étape S20, la taille du trou intérieur du siège de palier (1) est déterminée en fonction de la dilatation différentielle, du diamètre extérieur du palier lisse (2) et d'une certaine quantité d'interférence, cette dernière étant une augmentation de la dilatation différentielle par une force de précontrainte, et remplaçant la dilatation différentielle pour obtenir un effet anti-desserrage à haute température.

8. Procédé de conception et de développement d'une pompe à entraînement magnétique haute température selon la revendication 7, dans lequel le taux d'interférence est de 115 % à 130 % de la dilatation différentielle.

9. Une pompe à entraînement magnétique haute température, conçue et développée selon la méthode de conception et de développement d'une pompe à entraînement magnétique haute température selon l'une quelconque des revendications 1 à 8.
